# EUROPEAN PATENT APPLICATION

(11) **EP 1 661 826 A1**
(43) Date of publication of application: **31.05.2006**
(21) Application number: 04257395.6
(22) Date of filing: 30.11.2004
(51) Int. Cl.: B65D 90/46, B60K 15/04, F16L 11/127, B29C 70/88, B60R 16/06, B32B 33/00, C23C 18/02, B32B 15/08

(54) **Grounded fuel filler pipes**

(71) Applicant: Delphi Technologies, Inc., Troy, MI 48007 (US)
(72) Inventor: Loevenbruck, Remi B., 6720 Habay La Neuve (BE); Habay, André N., 54260 Longuyon (FR)
(74) Representative: Jones, Keith William

(57) **Abstract**

The invention relates to a fuel filler pipe (10) made of plastics material (i.e. polyolefine material) having a grounded connection in order to prevent the accumulation of electrical charge generated as fuel flows within the pipe. The fuel filler pipe (10) is provided with a layer of grounded electrically conducting material (20) (preferably metal such as aluminium) on at least part of its exterior surface in order to provide the grounded connection. A method of manufacturing a grounded fuel filler pipe (10) is also described wherein part of its exterior surface is surface treated (for example, by flame treatment, corona discharge or chemical oxidation) before applying a grounded metallic layer of, for example, aluminium by way of vacuum deposition.

## Description

The present invention relates to fuel filler pipes and particularly, but not exclusively, to grounded fuel filler pipes for motor vehicles.

The potential hazards involved in transferring flammable or combustible liquids between containers are well known. In particular, an electrical charge can build up within a flammable or combustible liquid, such as vehicle fuel, as it flows through a pipe. The extent of the electrical charge generated will depend upon factors such as the volume of liquid flowing within a pipe and its flow rate.

New vehicle fuels tend to have lower and lower electrical conductivity and therefore hold more electrical charge even when in contact with a grounded conducting material. Moreover, the use by vehicle manufacturers of fuel filler pipes made from plastics materials (such as polyolefines) has compounded the problem of the accumulation of electrical charge during refuelling. During refuelling, fuel discharges on the fuel filler pipe. The accumulation of different levels of electrical charge in close proximity may create a spark. Consequently, there is a risk that the mixture of fuel vapour and air will ignite and cause a fire or explosion hazard.

These recognised dangers have led to the inclusion of grounding wires or other antistatic (i.e. conductive) means within vehicle fuel lines and pipes with the aim of minimising levels of electrical charge by dissipating it to the ground before it can increase to a potentially dangerous level. For example, EP0470606 describes an antistatic fuel line having composite polyamide layers at least one of which contains conductive carbon black material.

However, the incorporation of antistatic means within fuel filler pipes may significantly complicate the manufacturing process and result in higher costs due to the use of more expensive materials. For example, additional manufacturing steps are required in order to adapt filler pipes to have antistatic properties. This may involve the employment of additional parts such as fixings or inserts to hold grounding wires in place within the filler pipes. Such fixings or inserts generally necessitate forming a hole in the pipe, which is not desirable. Grounding wires also require to be routed from the interior of the filler pipes to their exterior.

Pipes with integral antistatic layers have been used as filler pipes but, in comparison to pipes formed from plastics materials, these may be relatively expensive and more difficult to manufacture. Also, it may not be necessary to have an antistatic layer provided along the entire length of the pipe so there may be an element of waste. In addition, integral antistatic layers require to be grounded.

According to a first aspect of the present invention there is provided a fuel filler pipe for conveying fuel from a source to a container wherein substantially all of said pipe is made from plastics material; the fuel filler pipe being characterised in that at least part of its surface is provided with a layer of electrically conducting material.

Preferably, the electrically conducting material is grounded by means of an electrical connection to earth.

Preferably, the layer of electrically conducting material is provided on the exterior surface of the filler head portion.

Optionally, the layer of electrically conducting material extends into the interior surface of the filler head portion.

Preferably, the fuel is a liquid.

Preferably, the source is a fuel dispenser having a fuel dispensing nozzle which is receivable within the fuel filler pipe.

Preferably, the container is a vehicle fuel reservoir.

Preferably, the plastics material is a polyolefine material.

Preferably, the electrically conducting material is a metal such as aluminium.

According to a second aspect of the present invention there is provided a method of manufacturing a grounded fuel filler pipe made from plastics material characterised in that the method comprises the step of:
applying an electrically conducting layer to part of the exterior surface of the filler pipe.

Preferably, the method further comprises the step of surface treating the part of the fuel filler pipe by which it is intended to apply the electrically conducting layer.

Preferably, the step of surface treating involves oxidising.

Preferably, the method of oxidising involves a technique chosen from the group comprising (i) flame treatment; (ii) corona discharge; (iii) chemical oxidation; and (iv) plasma treatment.

Preferably, the step of surface treating involves surface treating a filler head portion of the fuel filler pipe.

Preferably, the step of applying an electrically conducting layer involves applying a metal by a process such as vacuum deposition.

Preferably, the method further comprises adapting the electrically conducting layer to be grounded

Embodiments of the present invention will now be described, by way of example only, with reference to the accompanying drawings in which:

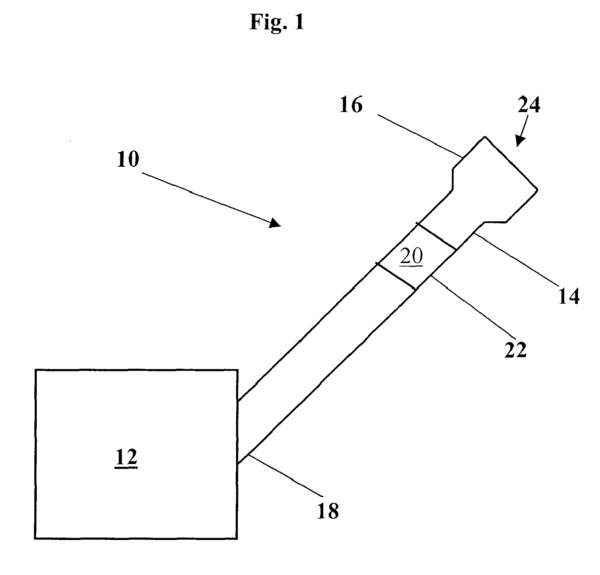

Fig. 1 is a perspective view of a fuel filler pipe according to the present invention.

Fig. 1 shows a hollow fuel filler pipe 10 made substantially entirely from a plastics material (for example, a polyolefine material) for conveying liquid fuel to a fuel reservoir 12. The pipe 10 has an upstream end 14 which terminates in a filler head portion 16 and a downstream end 18 which is connected to the fuel reservoir 12. The filler head portion 16 is provided with an opening 24 adapted to receive liquid fuel from a nozzle of a fuel dispenser(not shown). A part 22 of the pipe 10 is provided on its exterior surface with a layer of aluminium 20 which is grounded by means of an electrical connection (not shown). Because of its electrical conductivity and its grounding, the aluminium layer 20 provides an electrical path to earth.

The layer of aluminium 20 is coated onto the exterior surface of the filler head portion 16 after the fuel filler pipe 10 is manufactured. The process of applying the aluminium layer 20 requires that the exterior surface of the filler head portion 16 is oxidised in order to allow the aluminium layer 20 to adhere to the polyolefine surface. Such surface treatment is achieved using one or more of the following techniques: (i) flame treatment; (ii) corona discharge; and (iii) chemical oxidation. The aluminium layer 20 is then coated onto the exterior surface of the filler head portion 16 by vacuum deposition.

In use, as liquid fuel is conveyed through the fuel filler pipe 10, the natural accumulation of electrical charge within the fuel filler pipe 10 is dissipated due to the existence of the electrically conducting aluminium layer 20 which provides a path for the charge to escape to the ground.

It will be appreciated by those skilled in the art that the incorporation of a metallic layer on the surface of the fuel filler pipe of the present invention requires no significant mechanical modifications to a standard fuel filler pipe. Accordingly, the manufacturing process is significantly simplified as compared to existing grounded fuel filler pipes which incorporate additional parts.

Modifications and improvements may be made without departing from the scope of the present invention. For example, the fuel filler pipe need not necessarily be restricted to use within a vehicle but could equally be adapted for use in the transfer of fuel between any two containers. Also, the fuel filler pipe need not be restricted to use with only vehicle fuel and could be used to convey other combustible or flammable fuels in liquid or gaseous form.

## Claims

1. A fuel filler pipe (10) for conveying fuel from a source to a container (12) wherein substantially all of said pipe (10) is made from plastics material; the fuel filler pipe (10) being **characterised in that** at least part of its surface is provided with a layer of electrically conducting material (20).

2. A fuel filler pipe (10) according to claim 1 wherein the electrically conducting material is grounded by means of an electrical connection to earth.

3. A fuel filler pipe (10) according to claim 1 or claim 2 wherein, the layer of electrically conducting material (20) is provided on the exterior surface of a filler head portion (16) of the fuel filler pipe (10).

4. A fuel filler pipe (10) according to claim 3 wherein, the layer of electrically conducting material (20) extends into the interior surface of the filler head portion (16).

5. A fuel filler pipe (10) according any preceding claim wherein the fuel is a liquid.

6. A fuel filler pipe (10) according to any preceding claim wherein, the source is a fuel dispenser having a fuel dispensing nozzle which is receivable within the fuel filler pipe.

7. A fuel filler pipe (10) according to any preceding claim wherein, the container is a vehicle fuel reservoir (12).

8. A fuel filler pipe (10) according to any preceding claim wherein, the plastics material is a polyolefine material.

9. A fuel filler pipe (10) according to any preceding claim wherein, the electrically conducting material is a metal such as aluminium.

10. A method of manufacturing a grounded fuel filler pipe (10) made from plastics material **characterised in that** the method comprises the step of:
applying a grounded electrically conducting layer to the surface treated part of the exterior surface of the filler pipe.

11. The method according to claim 10, further comprising the step of surface treating the part of the fuel filler pipe to which it is intended to apply the electrically conducting layer.

12. The method of claim 11 wherein, the step of surface treating involves oxidising.

13. The method of claim 12 wherein, the method of oxidising involves a technique chosen from the group comprising (i) flame treatment; (ii) corona discharge; (iii) chemical oxidation; and (iv) plasma treatment.

14. The method of any of claims 10 to 13 wherein, the step of surface treating involves surface treating a filler head portion of the fuel filler pipe.

15. The method of any of claims 10 to 14 wherein, the step of applying an electrically conducting layer involves applying a metal by a process such as vacuum deposition.

16. The method of any of claims 10 to 15 further comprising adapting the electrically conducting layer to be grounded.
